# EUROPÄISCHE PATENTSCHRIFT

(11) **EP 0 568 531 B1**
(45) Veröffentlichungstag und Bekanntmachung des Hinweises auf die Patenterteilung: **11.01.1995**
(21) Anmeldenummer: 91910045.3
(22) Anmeldetag: 24.05.1991
(51) Int. Cl.: A47J 27/08, A47J 36/10, A47J 27/09, A47J 27/092

(54) **KOCHGEFÄSS**
COOKING VESSEL
RECIPIENT DE CUISSON

(30) Priorität: 26.05.1990 DE 4017067
(43) Veröffentlichungstag der Anmeldung: 10.11.1993
(73) Patentinhaber: SCHULTZ, Horst, D-65239 Hochheim (DE)
(72) Erfinder: SCHULTZ, Horst, D-65239 Hochheim (DE)
(74) Vertreter: Keil, Rainer A., Dipl.-Phys. Dr.
(86) Internationale Anmeldenummer: EP9100965
(87) Internationale Veröffentlichungsnummer: WO9118543

(56) Entgegenhaltungen:
- EP-A- 0 032 406
- DE-A- 2 845 800
- DE-A- 3 232 907
- DE-U- 8 419 665
- DE-U- 9 007 031
- FR-A- 821 998
- FR-A- 1 052 130
- FR-A- 2 451 733
- FR-E- 67 030
- US-A- 1 439 000
- US-A- 1 907 528

## Beschreibung

Die Erfindung bezieht sich auf ein Kochgefäß gemäß dem Oberbegriff des Anspruchs 1.

In der US-A-1,439,000 wird ein derartiges Kochgefäß beschrieben, bei dem die einzelnen Verschlußglieder aus Haken bestehen, die jeweils über eine Hebelanordnung mit einem Betätigungselement verbunden sind. Beim Aufsetzen des Deckels auf den Behälter sind die Verschlußglieder nach oben geklappt und werden nach dem Aufsetzen um die Schwenkachse herumgeschwenkt. Durch Drehen des Betätigungselements werden alle Verschlußglieder gemeinsam in Verriegelungsstellung gebracht, in der sie den Behälterrand untergreifen. Durch die hakenförmige Ausgestaltung der Verschlußglieder greifen diese nur in schmalen Bereichen an dem Behälterrand an. Um die bei hohen Dampfdrücken erforderlichen Haltekräfte aufnehmen zu können, muß der Behälterrand daher entsprechend stabil ausgeführt sein. Bei dem bekannten Kochgefäß weist der Behälter in seinem Randbereich auch eine entsprechende Verstärkung auf, die die Herstellung des Behälters erschwert und verteuert. Außerdem ist die Handhabung der einzelnen Verschlußglieder aufwendig und umständlich, wobei durch das punktweise Anpressen des Deckels auf den Behälter auch keine zuverlässige Abdichtung gewährleistet ist. Schließlich fehlt es an einer Sicherung gegen Öffnen des Behälters, während dieser noch unter Druck steht.

Ein aus der DE-OS 32 32 907 bekanntes Kochgefäß hat einen Kochgutbehälter mit umlaufendem Rand und einen Deckel, welcher geteilt ist und im wesentlichen aus einer kreisförmigen Haube sowie einem zu dieser konzentrischen und die Haube überlappend untergreifenden Rahmen besteht. Im Bereich des Rahmens sind am Deckel über seinen Umfang gleichmäßig verteilt mehrere Klammern angeordnet, welche in Verschlußstellung den Rahmen und den Behälterrand umgreifen. Zwischen dem Rahmen und dem Behälterrand ist ein Dichtungsprofil angeordnet. Über Federn, die über den Umfang des Deckels verteilt sind, werden die Haube und der Rahmen gegeneinander gespannt, während die Federn gleichzeitig axial auf die Klammern wirken. Zum Öffnen dieses Dampfdruckkochtopfes muß zunächst von oben auf den Deckelgriff gedrückt werden. Anschließend kann die Haube relativ zum Rahmen gegen die Kraft der Federn nach unten gedrückt werden. Hierbei lösen sich die unteren Schenkel der U-förmigen Klammern vom Rand des Behälters. Durch weiteren Druck auf den Griff und damit auf die Haube treten Sperrglieder aus Bohrungen im Rahmen aus. Sodann kann die Haube relativ zum Rahmen verdreht werden. Dabei bewegen sich die Klammern im wesentlichen radial auswärts und kommen mit ihren unteren Schenkeln vom Rand des Behälters frei, so daß der Deckel abgenommen werden kann. Bei dem Verschlußmechanismus handelt es sich somit um recht komplizierte Teile, die einer aufwendigen Fertigung bedürfen. Da die Klammern parallel zur Deckeloberfläche verschoben werden, können sie nur am äußeren Rand des nach unten abgewinkelten Topfrandes angreifen. Hierbei ergibt sich ein großer wirksamer Hebelarm für den Angriff des Gefäßinnendrucks. Aus diesem Grunde müssen Töpfe mit breitem Rand entsprechend stabil ausgebildet sein. Bei dem bekannten Dampfdruckkochtopf führt das prinzipbedingte Gleiten der Klammern unter Federdruck zu verhältnismäßig großen Schließkräften, welche in der Praxis das Öffnen und Schließen erschweren. Der Schließ- und Öffnungsvorgang ist ferner unbequem, da gleichzeitig gedrückt und gedreht werden muß. Schließlich muß die Dichtung einen hohen Reibwert aufweisen, um den Rahmen relativ zum Topf in Position zu halten. Kommt allerdings Öl oder ein anderes Gleitmittel zwischen Dichtung und Topfrand, kann dieser nicht geschlossen oder geöffnet werden.

Aufgabe der Erfindung ist es, ein Kochgefäß der eingangs genannten Art zur Verfügung zu stellen, das bequem, sicher und mit geringem Kraftaufwand geschlossen und geöffnet werden kann, einen einfach aufgebauten Verschlußmechanismus aufweist und daher kostengünstig herzustellen ist.

Diese Aufgabe wird erfindungsgemäß durch die kennzeichnenden Merkmale des Anspruchs 1 gelöst.

Durch die besondere Ausgestaltung des Verschlußgliedes und dessen schwenkbare Lagerung, vorzugsweise mit seiner Schwenkachse in unmittelbarer Nachbarschaft der Außenkante des Gefäßrandes, kann dieses um den Gefäßrand herumschwenken und dadurch den Behälterrand weit innen, dicht an der Behälterwandung untergreifen, auch wenn der Behälterrand außen nach unten abgewinkelt ist. Da keine Federkräfte und kein Gefäßinnendruck und folglich auch nur geringe Reibungskräfte auf das Verschlußglied wirken, kann der Öffnungs- und Verschlußvorgang von der Bedienungsperson bequem und mit geringem Kraftaufwand sicher durchgeführt werden, insbesondere, wenn der Formkörper aus einem Material mit geringen Reibungkoeffizienten, wie Kunststoff, besteht. Das erfindungsgemäße Verschlußprinzip ist sowohl für runde oder ovale als auch für mehreckige, insbesondere quadratische oder rechteckige Kochgefäße anwendbar, wobei unterschiedliche Gefäßformen immer mit den gleichen Verschlußgliedern und Formkörpern ausgestattet werden können, lediglich in Anpassung an die unterschiedliche Außenkontur in unterschiedlicher Anordnung zueinander. Der gesamte Verschlußmechanismus mit den Verschlußgliedern kann als eine Einheit am Deckel angeordnet sein und stört nicht bei der Handhabung des Behälters, beispielsweise beim Einfüllen und Ausschütten des Kochgutes. Durch die Anordnung der Verschlußglieder im Bereich des Deckelrandes wird ferner erreicht, daß - bei entsprechender Anordnung der Schwenkachse - für die Schwenkbewegung um entsprechende Winkelgrade die Verschlußglieder mit geringer Betätigungsmechanik den Topfrand weit untergreifen können. Der genaue Angriffsbereich der schwenkbaren Verschlußglieder am Topfrand ist durch die Wahl der Lage der Schwenkachse bestimmbar. Die Gestaltung der Verschlußglieder stellt ferner sicher, daß diese auch verhältnismäßig hohen Drücken standhalten können. Durch die Lagerung der Verschlußglieder auf einem der Innenkontur der Verschlußglieder angepaßten Formkörper läßt sich eine zuverlässige Schwenkbewegung zum Öffnen und Schließen des Kochgefäßes erzielen.

Eine besonders raumsparende Bauweise wird dann erzielt, wenn der Formkörper am Deckelrand angeordnet ist und in einer sektor- oder segmentförmigen Aussparung den Behälterrand und den Deckelrand aufnimmt.

Wenn jedenfalls ein Teil der als Lagerfläche dienenden Oberfläche des Formkörpers in Anpassung an die Innenkanten des Verschlußgliedes kreiszylindrisch ausgebildet ist, sind zum Betätigen des Verschlußgliedes lediglich geringe Betätigungskräfte erforderlich, um das Kochgefäß zu öffnen oder zu schließen.

In einer Weiterbildung des Erfindungsgedankens weist die Lagerfläche des Formkörpers wenigstens eine Abflachung oder Einbuchtung auf, welche in Verriegelungsstellung des Verschlußelements mit einem entsprechend flachen oder oder komplementär gewölbten Sicherungswandabschnitt des Verschlußelements zusammenwirkt. Hierbei sind Formkörper und Verschlußglied jeweils so bemessen, daß in Verriegelungsstellung des Verschlußgliedes sich der Deckel unter dem sich im Gefäßinnenraum aufbauenden Druck geringfügig von dem Behälter abheben kann; die Abdichtung des Deckels gegenüber dem Behälter bleibt dabei mittels einer Ringdichtung nach wie vor gewährleistet. Auf diese Weise wird erreicht, daß das Verschlußelement erst wieder in seine Öffnungsstellung zurückgeschwenkt werden kann, wenn der Gefäßinnendruck abgebaut ist. Diese Anordnung bildet daher eine Nulldrucksicherung.

Die Abdichtung des Deckels gegenüber dem Behälter kann vorzugsweise mittels einer Dichtungslippe einer am Gefäßrand angeordneten Ringdrichtung gewährleistet sein, welche sich unter dem Gefäßinnendruck an den Behälter bzw. den Deckel anlegt.

Die erfindungsgemäße Verschlußmechanik ist noch leichter betätigbar, wenn gemäß einem weiteren Erfindungsmerkmal jedenfalls die Lagerfläche des Formkörpers für das Verschlußglied aus einem Material, insbesondere Kunststoff, mit geringem Reibwert besteht.

Im äußersten Falle genügt ein einziges Verschußglied beispielsweise dann, wenn der Deckel an der dem Verschlußglied gegenüberliegenden Seite an dem Behälter angelenkt ist.

Zweckmäßiger ist es jedoch, mehrere Verschlußglieder über den Umfang des Gefäßrandes verteilt anzuordnen. Damit alle Verschlußglieder und Formkörper, auch wenn die Außenkontur des Gefäßrandes rund oder oval ist, gleiche Gestalt haben können, werden die Verschlußglieder in Draufsicht auf den Deckel gesehen, vorzugsweise polygonzugartig im Bereich des Gefäßrandes angeordnet. Hierbei können die Verschlußglieder einen mehr oder weniger großen Abstand voneinander haben, wobei die Länge der jeweiligen Formkörper auf die Länge der Verschlußglieder begrenzt sein kann. Die Formkörper können sich aber auch über die Verschlußglieder hinaus und zwischen diesen erstrecken, wobei insbesondere auch vorgesehen sein kann, daß die Verschlußglieder auf seitlich in sie hineinragende Achsstummel der zwischen den Verschlußgliedern angeordneten Formkörpern gelagert sind. Die polygonzugartige Anordnung der Verschlußglieder ergibt sich insbesondere dann, wenn die Verschlußglieder rohrabschnittartig ausgebildet sind. Bei Kochgefäßen mit geraden Gefäßrandbereichen können die Verschlußglieder des erfindungsgemäßen Verschlußmechanismus unmittelbar parallel zu dem ihnen zugeordneten Gefäßrand verlaufen. Es hat sich gezeigt, daß bei einem Kochgefäß üblichen Durchmessers und runder Außenkontur mit zwölf in einem Polygonzug angeeordneten Verschlußgliedern ein annhähernd vollständiges Untergreifen des Topfrandes erreichbar ist, wobei jedes Verschlußglied nur anteilig Kräfte während der Benutzung des Kochgefäßes aufnimmt.

Das Öffnen und Schließen des erfindungsgemäßen Kochgefäßes kann dadurch weiter vereinfacht werden, daß die Verschlußglieder über einen gemeinsamen Betätigungsmechanismus synchron betätigbar sind.

In einer besonders einfachen Ausgestaltung dieses Erfindungsgedankens weist der Betätigungsmechanismus eine - dem Gefäßrand folgende - flexible Welle zum gemeinsamen Betätigen der Verschlußglieder auf.

Zum Verschwenken der Verschlußglieder können dabei an der Welle die Verschlußglieder betätigende Mitnehmerarme befestigt sein.

Eine besonders zweckmäßige und platzsparende Anordnung erhält man dann, wenn die Welle in den Formkörpern im Bereich der Schwenkachse vorzugsweise koaxial zu dieser drehbar angeordnet ist. Hierbei ist in jedem Formkörper eine Aussparung für die Schwenkbewegung des jeweiligen Mitnehmerarms vorgesehen. Aufgrund dieser besonderen Ausbildung des Betätigungsmechanismus ist es lediglich erforderlich, die Schließ- und Öffnungskräfte an einer Stelle in die flexible Welle oder in ein Verschlußglied einzuleiten, da die anderen Verschlußglieder über die flexible Welle miteinander in Verbindung stehen und dadurch mitverschwenkt werden.

Der Öffnungs- und Schließvorgang kann von der Bedienungsperson insbesondere dann leicht vorgenommen werden, wenn die Welle bzw. mindestens eines der Verschlußglieder über z.B. eine Betätigungsstange aufweisende Betätigungsmittel von der Oberseite des Deckels, vorzugsweise dem Deckelgriff, aus zentral betätigbar ist bzw. sind. Ein gleichzeitiges Drehen und Drücken wie bei dem eingangs erwähnten bekannten Kochgefäß ist nicht erforderlich.

Wenn die Betätigungsmittel an wenigstens einem an der Welle oder wenigstens einem der Verschlußglieder befestigten Schwenkhebel angreifen, kann der Öffnungs- und Schließvorgang beispielsweise durch ein einfaches Hin- und Herbewegen eines Betätigungshebels bzw. Drehen oder Drücken eines Betätigungsknopfes usw. erfolgen.

Eine andere Ausgestaltung der Erfindung sieht vor, daß an der Welle oder wenigstens einem der Verschlußglieder ein nach außen weisender Handbetätigungshebel befestigt ist, mit welchem das Kochgefäß ohne besonderen Kraftaufwand unmittelbar verschlossen und geöffnet werden kann.

Im Rahmen der Erfindung ist es auch möglich, daß der Betätigungsmechanismus mittels eines in Abhängigkeit von dem Gefäßinnendruck als Nulldrucksicherung wirkenden Sperrgliedes gegen Öffnen der Verschlußglieder sicherbar ist, so daß das Kochgefäß erst geöffnet werden kann, wenn sich der Druck im Gefäßinnenraum abgebaut hat.

Dieses Sperrglied kann beispielsweise als in dem Deckel angeordneter, sich unter dem Gefäßinnendruck bzw. seinem Eigengewicht auf- und abbewegender Sperrstift ausgebildet sein, welcher in Sperrstellung eine Bewegung der Betätigungsmittel für die Verschlußglieder in die Öffnungsstellung verhindert.

Nach einer anderen vorteilhaften Ausgestaltung der Erfindung weist das Kochgefäß Betätigungsmittel für die Verschlußglieder auf, welche durch den sich im Gefäßinnenraum aufbauenden Gefäßinnendruck betätigt werden. Auf diese Weise schließen sich die Verschlußglieder selbsttätig mit sich aufbauendeem Gefäßinnendruck, während sie sich dann und nur dann öffnen, wenn der Gefäßinnendruck jedenfalls bis zu einem vorgegebenen Grad abgebaut ist. Bei dieser Ausführung ist ein Verschließen und Öffnen des Kochgefäßes von Hand nicht mehr erforderlich - der Schließ- und Öffnungsvorgang erfolgt selbsttätig. Die Bedienungsperson braucht lediglich den Deckel auf den Behälter aufzusetzen bzw. von ihm nach Beendigung des Kochvorganges und des Druckabbaues wieder abzunehmen.

Hierbei ist vorzugsweise vorgesehen, daß die Betätigungsmittel Übertragungsmittel aufweisen, welche die Bewegung eines sich unter dem Gefäßinnendruck anhebenden und unter dem Eigengewicht absenkenden Innendeckels auf die Verschlußglieder oder die Welle übertragen. Bei dieser Ausgestaltung wird der sich im Behälter aufbauende Gefäßinnendruck zum Anheben des Innendeckels genutzt, wodurch der Innendeckel seinerseits die Verschlußglieder in die Verriegelungsstellung schwenkt. Nach Beendigung des Kochvorganges und Abbau des Gefäßinnendruckes senkt sich der Innendeckel aufgrund seines Eigengewichts wieder ab und überträgt mittels der Übertragungsmittel diese Bewegung ebenfalls auf die Verschlußglieder, die dadurch selbsttätig in ihre Öffnungsstellung schwenken.

Eine einfache Ausgestaltung dieses Erfindungsgedankens sieht vor, daß die Übertragungsmittel wenigstens ein an dem Innendeckel und der Welle oder an wenigstens einem der Verschlußglieder angreifendes, z.B. als den Innendeckel umgreifender Drahtring ausgebildetes Verbindungsglied aufweisen.

Eine besonders einfache und zweckmäßige Halterung des Verbindungsgliedes wird dann erreicht, wenn es einerseits fest mit dem Innendeckel verbunden in eine Umfangsnut des Innendeckels und andererseits drehbar gelagert in eine Öse des Verschlußgliedes eingreift.

Bei einer noch weiteren besonders einfachen Ausgestaltung des selbsttätigen Verriegelungsmechanismus weist der Deckel einen äußeren, den Deckelrand bildenden Ringabschnitt auf, auf welchem die Verschlußglieder angeordnet sind und in welchem der Innendeckel auf- und abbewegbar geführt ist.

Dabei ist der Innendeckel vorzugsweise mittels einer ggf. Durchtrittsöffnungen aufweisenden Dichtungslippe an dem Ringabschnitt geführt. Die von der Dichtungslippe auf den Innendeckel ausgeübten Reibungskräfte sind dabei geringer zu halten, als diejenigen Kräfte, mit welchen der Ringabschnitt mittels einer Dichtung an dem Behälter, beispielsweise mittels einer an der Behälterinnenwandung anliegenden Dichtungslippe der zwischen Deckel und Behälter wirksamen Ringdichtung, gehalten wird. Auf diese Weise wird gewährleistet, daß sich der Innendeckel relativ zu dem Ringabschnitt bei Druckaufbau im Gefäßinneren allmählich anhebt, während über die freigehaltenen Durchtrittsöffnungen die sich im Gefäßinneren bei Kochbeginn befindliche Luft aus dem Gefäßinnenraum herausbewegen kann, so daß von dem Deckel die Funktion eines Aromaventils erfüllt wird.

Vorzugsweise untergreift der Innendeckel bei dieser Ausgestaltung des Erfindungsgedankens den Ringabschnitt mit einem nach außen abgewinkelten Dichtrand, welcher sich erst in der obersten Verschlußstellung des Innendeckels, also unter hinreichend aufgebautem Gefäßinnendruck, dichtend an den Ringabschnitt, ggf. unter Zwischenlage einer Ringdichtung, anlegt. Hierdurch wird eine gute Abdichtung zwischen dem Ringabschnitt und dem Innendeckel gewährleistet, so daß kein Dampf mehr während des Kochens, d.h. bei Überschreiten eines bestimmten Gefäßinnendruckes, austreten kann.

Die Dichtungslippe, mit Hilfe welcher der Innendeckel an dem Ringabschnitt geführt ist, kann vorzugsweise ein Teil der Ringdichtung bilden, welcher auch der Anlage des Dichtrandes des Innendeckels in Schließstellung dient.

Die Ringdichtung läßt sich auswechselbar auf den Innenrand des Ringabschnitts anordnen, wenn sie auf diesen aufgesteckt ist, was für ein Verschleißteil dieser Art wichtig ist.

Dabei weist die Ringdichtung vorzugsweise eine sich unter dem Gefäßinnendruck an die Innenfläche der Behälterwandung anlegende Dichtlippe auf, so daß die Dichtigkeit des Kochgefäßes mit steigendem Gefäßinnendruck weiter erhöht wird.

Um dem Deckel des erfindungsgemäßen Kochgefäßes ein ansprechendes Aussehen zu geben und die Verschlußglieder und Formkörper gegen eindringenden Schmutz zu schützen, sind bei einer weiteren Ausgestaltung der Erfindung die Verschlußglieder von einer um den Deckel umlaufenden Abdeckung überkragt. Eine derartige haubenartige Abdeckung hat ferner den wesentlichen Vorteil, daß beim Druckentlasten des Kochgefäßes unter kaltem Wasser, das Wasser nach außen abgewiesen wird.

Dabei kann die Abdeckung mit dem Deckelrand bzw. dem den Deckelrand bildenden Ringabschnitt oder einen Teil derselben eine selbständig montierbare und demontierbare bauliche Einheit bilden. Diese kann dann auf einfache Weise zu Reinigungszwecken von dem Deckel gelöst und nach der Reinigung wieder an dem Deckel befestigt werden.

Es ist aber auch möglich, daß der Deckel einen die Verschlußglieder und ggf. den Innendeckel übergreifenden Oberdeckel aufweist, so daß die Verschlußmechanik nach außen oben praktisch vollständig abgedeckt und dem Kochgefäß das "technische" Aussehen genommen ist.

Bei einer besonders einfachen Ausgestaltung der Erfindung können die Formkörper von dem Randabschnitt des Oberdeckels selbst gebildet sein, welcher in diesem Fall also ebenfalls beispielsweise aus Kunststoff bestehen kann.

Insbesondere dann, wenn die Verschußglieder und der Innendeckel von einem Oberdeckel abgedeckt sind, ist es von Vorteil, wenn der Innendeckel mit einem Anzeigestift zusammenwirkt, welcher die Stellung des Innendeckels relativ zu dem Ringabschnitt anzeigt. Auf diese Weise kann auch für diesen Fall festgestellt werden, ob sich das Kochgefäß in verschlossenem oder geöffnetem Zustand befindet.

Dabei kann der Anzeigestift vorzugsweise in dem Deckelgriff axial beweglich gelagert sein und mit diesem eine bauliche Einheit bilden.

Im Rahmen der Erfindung ist es ferner von Vorteil, wenn ein Thermometer in einem mittig im Oberdeckel vorgesehenen Deckelgriff angeordnet und mit einem Fortsatz durch die Wandung des Oberdeckels und ggf. die Wandung des Innendeckels bis zum Gefäßinnenraum hindurchgeführt ist. Auf diese Weise ist es möglich, die Entlüftung an der höchsten Stelle des Deckels und am Thermometer vorbeizuführen, wodurch ein besserer Wäremübergang und eine zuverlässige Temperaturmessung gewährleistet ist.

Dabei ist der Fortsatz vorzugsweise in der Wandung des Innendeckels verschieblich gelagert.

Ein weiteres Erfindungsmerkmal besteht hierbei darin, daß der Deckelgriff auf seiner Unterseite eine Umfangsringdichtung trägt, gegen welche sich die Wandung des Innendeckels in dessen Verschlußstellung dichtend anlegt. Auf diese Weise kann gewährleistet werden, daß der Zwischenraum zwischen Deckelgriff und Innendeckel in Verschlußstellung nach außen abgedichtet ist.

Vorzugsweise ist in der Wandung des Innendeckels eine Führungsbuchse für den Fortsatz unter Wahrung eines Entlüftungsspalts angeordnet und die Führungsbuchse weist eine Innenschulter auf, gegen welche sich der Fortsatz in Verschlußstellung des Innendeckels dichtend anlegt. Auf diese Weise wird gewährleistet, daß bis zum vollständigen Schließen des Innendeckels die sich oben unter dem Innendeckel ansammelnde Luft aus dem Gefäßinnenraum an dem Thermometerfortsatz vorbei zur praktisch vollständigen Entlüftung des Gefäßinnenraums austreten kann, andererseits aber der Gefäßinnenraum bei vollständig angehobenem Innendeckel auch im Bereich des Thermometers hermetisch abgedichtet ist.

Zum gleichen Zweck ist bei einer alternativen Ausgestaltung der Erfindung vorgesehen, daß der Fortsatz unter Wahrung eines Entlüftungsspalts durch die Wandung des Innendeckels hindurchgeführt ist und der Deckelgriff auf seiner Unterseite einen den Fortsatz unmittelbar umgebende Ringdichtung trägt, gegen welche sich die Wandung des Innendeckels in dessen Verschlußstellung dichtend anlegt.

In Weiterbildung der Erfindung kann bei einer anderen Ausgestaltung beispielsweise der Deckelgriff drehbar an der Wandung des Oberdeckels ein Abdampfventil überkragend gehalten sein und eine Betätigungskurve aufweisen, mittels welcher unter Drehen des Deckelgriffs der Verschlußkörper des Abdampfventils von seiner Schließstellung in eine Öffnungsstellung überführbar ist.

Dabei hat der Deckelgriff im Bereich des Abdampfventils vorzugsweise eine Austrittsöffnung, welche den durch das Abdampfventil austretenden Dampf zur Seite hin ablenkt, so daß sich die Bedienungsperson bei Betätigen des Abdampfventils durch Drehen des Deckelgriffs nicht die Hand an dem ausströmenden Dampf verbrennt.

Das Abdampfventil selbst kann beispielsweise in der Wandung des Innendeckels angeordnet sein und dadurch geschützt liegen.

Weitere Ziele, Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1a,b: schematisch eine Schnittdarstellung eines Verschlußmechanismus gemäß einer Ausgestaltung der Erfindung, senkrecht zur Schwenkachse der Verschlußglieder geschnitten, und zwar Fig. 1a in Öffnungsstellung und in Fig. 1b in Verriegelungsstellung der Verschlußglieder,
- Fig. 2a,b: Darstellungen entsprechend Fig. 1a und 1b für eine andere Ausgestaltung der Erfindung,
- Fig. 3a,b: Darstellungen entsprechend Fig. 1a und 1b für eine noch weitere Ausgestaltung der Erfindung,
- Fig. 4a,b: Darstellungen entsprechend Fig. 1a und 1b für eine vierte Ausgestaltung der Erfindung,
- Fig. 5: eine Ausgestaltung der Erfindung, bei welcher der Verschlußmechanismus vom Deckel aus betätigbar ist,
- Fig. 6a,b: Darstellungen ähnlich den Fig. 1a und 1b für eine Ausgestaltung der Erfindung, bei welcher das Schließen und Öffnen des Verschlußmechanismus selbsttätig in Abhängig des Gefäßinnendruckes erfolgt,
- Fig. 6c: eine Draufsicht auf ein erfindungsgemäßes Kochgefäß entsprechend der Ausführungsform der Fig. 6a und 6b, teilweise weggebrochen und bei abgenommenem Oberdeckel,
- Fig. 6d: einen vollständigen Vertikalschnitt durch ein Kochgefäß entsprechend der Erfindung nach der in den Fig. 6a bis 6c dargestellten Ausführungsform mit einem besonders ausgestalteten Deckelgriff, und
- Fig. 7: eine Darstellung entsprechend Fig. 7 jedoch für eine noch weitere Ausgestaltung der Erfindung.

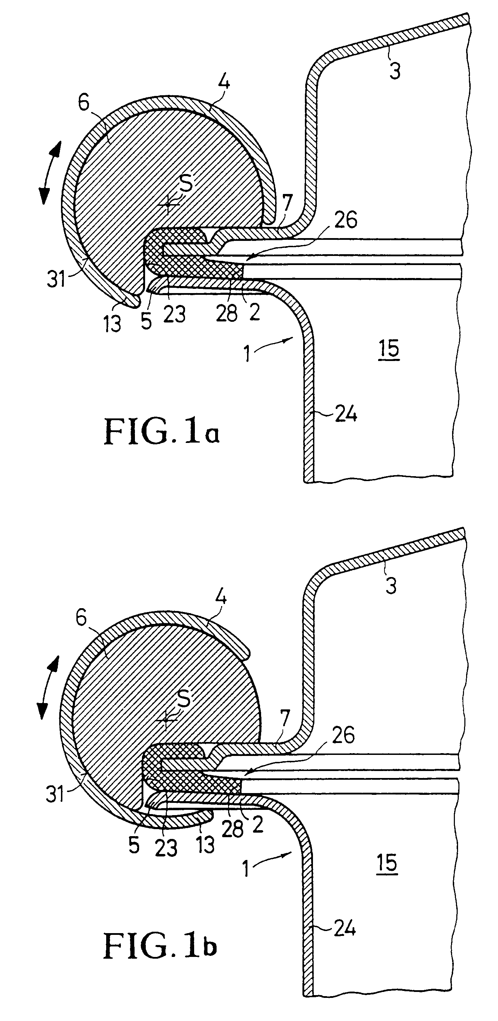

Das in den Fig. 1a und 1b ausschnittsweise dargestellte Kochgefäß weist einen oben offenen beispielsweise als Topf, Tiegel oder Pfanne ausgebildeten Behälter 1 zur Aufnahme von Kochgut mit einem nach außen und unten abgewinkelten Behälterrand 2 auf. Auf den Behälterrand 2 ist ein Deckel 3 mit einem Deckelrand 7 aufsetzbar. Auf den Deckelrand 7 ist eine im Querschnitt im wesentlichen U-förmig ausgebildete Ringdichtung 26 aufgesteckt. Der Aufsteckbereich des Deckelrandes 7 ist derart nach unten abgewinkelt, daß die Oberseite der Ringdichtung 26 mit der Oberseite des sich innen anschließenden Bereiches des Deckelrandes 7 fluchtet. Der untere Schenkel der Ringdichtung 26, welcher zwischen Behälterrand 2 und Deckelrand 7 zu liegen kommt, verlängert sich in eine Dichtungslippe 28, welche unter dem im Gefäßinnenraum 15 herrschenden Druck gegen die Oberseite des Behälterrandes 2 gepreßt wird.

Das Kochgefäß ist mit einer Verschlußeinrichtung ausgestattet, welcher eine Anzahl von in gleichmäßigen Abständen über den Gefäßumfang verteilten Verschlußgliedern 4 aufweist. Die Verschlußglieder 4 sind im Bereich des Deckelrandes 7 angeordnet und sind aus einer den Deckel 3 gegenüber dem Behälter 1 freigebenden Öffnungsstellung (Fig. 1a) um eine etwa parallel zu der ihr zugewandten Außenkante 5 oder zu der Tangentialen dieser Außenkante 5 des Behälterrandes 2 verlaufende Schwenkachse S in eine Verriegelungsstellung (Fig. 1b) schwenkbar, in welcher das Verschlußglied 4 den Behälterrand 2 zur druckdichten Verriegelung des Deckels 3 gegenüber dem Behälter 2 untergreift. Die Schwenkachse S liegt in dem dargestellten Fall etwas oberhalb des Deckelrandes 7 etwa im Bereich der Außenkante desselben. Die Lage der Schwenkachse S ist bestimmt durch jeweils einen Formkörper 6 aus Kunststoff oder einem sonstigen Material mit geringem Reibwert, auf welchem das jeweilige Verschlußglied 4 schwenkbar gelagert ist. Das Verschlußglied 4 ist bei dieser Ausgestaltung als über seinen Teil seines Umfangs ausgeschnittener Hohlkörper ausgebildet, dessen kreiszylindrische Wandung im wesentlichen parallel zur Schwenkachse S verläuft. Der eine, den Ausschnitt des Hohlkörpers begrenzende Teil der Umfangswandung bildet einen Verriegelungswandabschnitt 13, welcher aus der in Fig. 1a dargestellten Öffnungsstellung, in welcher das Ende dieses Verriegelungswandabschnittes 13 außerhalb des Umfangs des Behälterrandes 2 liegt, in eine Verriegelungsstellung gemäß Fig. 1b schwenkbar ist, in welcher das äußere Ende des Verriegelungswandabschnitts 13 an der Unterseite des Behälterrandes 2 anliegt.

Der Formkörper 6 ist mit einer Aussparung 23 versehen, welche so angeordnet und bemessen ist, daß die die Aussparung 23 oben begrenzende Fläche des Formkörpers 6 auf dem oberen Schenkel der Ringdichtung 26 und dem sich nach innen anschließenden Teil des Deckelrandes 7 aufliegt, während die die Aussparung 23 außen begrenzende Fläche außen an der Ringdichtung 26 anliegt. Nach unten hin ist die Aussparung 23 offen. Die Aussparung 23 ist ihrer Breite und ihrer Höhe nach so bemessen, daß bei auf den Behälter 1 aufgesetztem Deckel 3 der Deckelrand 7 und der Behälterrand 2 einschließlich der Ringdichtung 26 von ihr aufgenommen werden und der Verriegelungswandabschnitt 13 ungehindert unter den Behälterrand 2 schwenkbar ist. Die Formkörper 6 mit den darauf gelagerten Verschlußgliedern 4 sind an dem Deckelrand 7 in nicht näher dargestellter Weise befestigt. In Draufsicht gesehen, haben die Verschlußglieder 4 die Form eines Rohrabschnitts. Die Verschlußglieder 4 und die Formkörper 6 bestehen jeweils aus geraden untereinander gleichen Teilstücken und bilden dadurch in Draufsicht auf einen im Umfang runden Deckel 3 bzw. Deckelrand 7 einen Polygonzug.

Aus der Darstellung ist ersichtlich, daß durch die Wahl der Lage der Schwenkachse S und durch den Durchmesser des Verschlußgliedes 4 bestimmbar ist, wo der Verriegelungswandabschnitt 13 auf der Unterseite des Behälterrandes 2 angreift; es ist also beispielsweise bestimmbar, daß dieser Angriffsbereich möglichst dicht bei der Behälterwandung 24 liegt, so daß der Behälterrand 2 auch bei hohen Druckbeanspruchungen nicht deformiert wird.

Aus den Fig. ist auch ersichtlich, daß aufgrund der Anordnung der Schwenkachse S und der Ausgestaltung des Verschlußgliedes 4 als Hohlkörper eine Abwinklung des Behälterrandes 2 an der Außenkante 5 nach unten umgriffen wird.

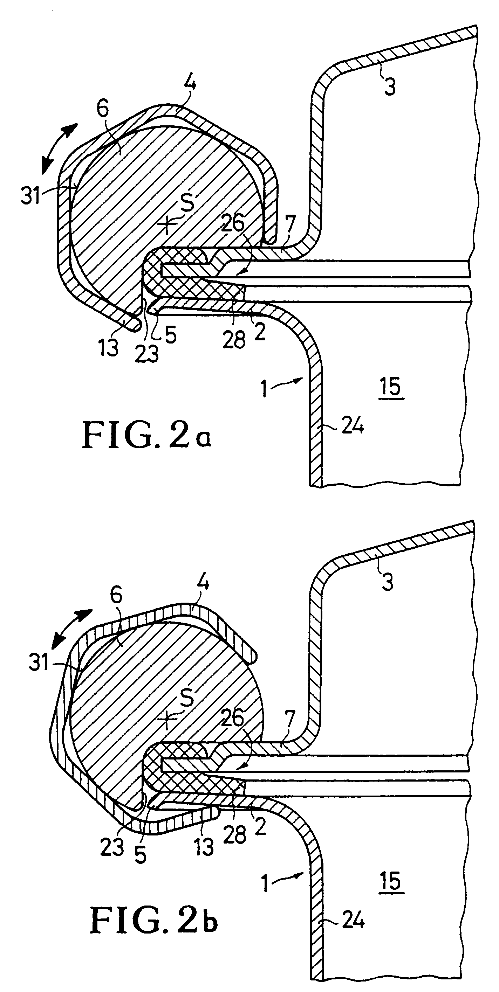

Die in den Fig. 2a und 2b dargestellte Ausführungsform der Erfindung unterscheidet sich von der in den Fig. 1a und 1b dargestellten lediglich dadurch, daß die Verschlußglieder 4 im Querschnitt nicht kreiszylindrisch sondern polygonal ausgebildet sind. Die Verschlußglieder 4 haben also eine prismatische Wandung mit sich ebenfalls im wesentlichen parallel zur Schwenkachse S erstreckenden Wandungsbereichen. Auch hier ist die Wandung über einen Teil ihres Umfangs ausgespart, so daß der Verriegelungswandabschnitt 13 durch Verschwenken aus der in Fig. 2a dargestellten Öffnungsstellung in die in Fig. 2b dargestellte Verriegelungsstellung überführbar ist. Die Lagerfläche 31 des Formkörpers 6 ist auch hier kreiszylindrisch. Sie wirkt mit den einzelnen Wandungsabschnitten der Verschlußglieder 4 zusammen.

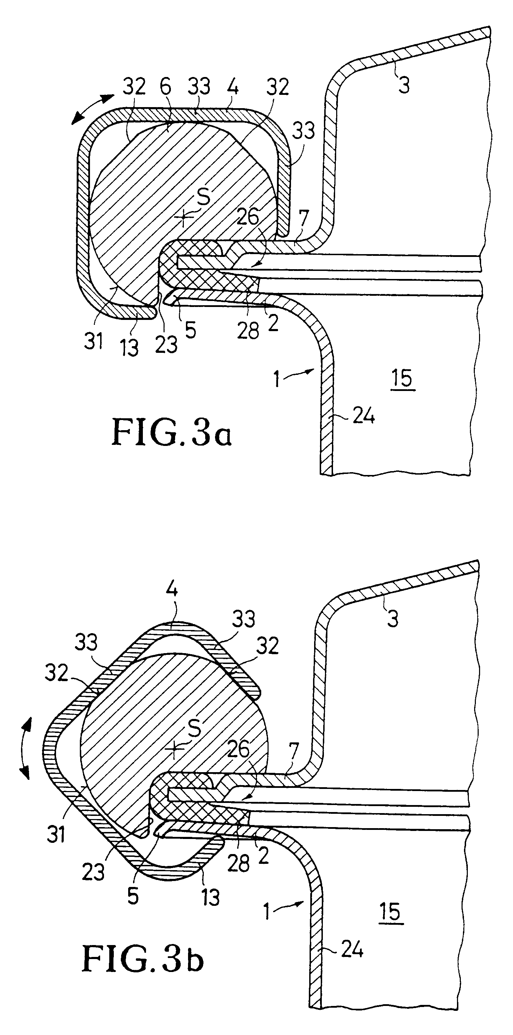

Auch bei der in den Fig. 3a und 3b dargestellten Ausführungsform der Erfindung haben die Verschlußglieder 4 eine prismatische, im dargestellten Fall eine im Querschnitt im wesentlichen quadratische Form. Die Lagerfläche 31 des Formkörpers 6 ist nicht vollständig kreiszylindrisch, sondern hat unter einem Winkel von jeweils 45° zur Horizontalen im Abstand von 90° jeweils eine Abflachung 32. Dies hat zur Folge, daß die Längsachse des Verschlußgliedes 4 in der in Fig. 3a veranschaulichten Öffnungsstellung etwas höher liegt, als in der in Fig. 3b dargestellten Verriegelungsstellung. Dies liegt daran, daß die beiden aneinandergrenzenden oberen Sicherungswandabschnitte 33 des Verschlußgliedes 4 in der Verriegelungsstellung nicht an dem kreiszylindrischen Teil der Lagerfläche 31 anliegen, sondern im Bereich der Abflachungen 32, welche einen geringeren Abstand von der Schwenkachse S haben. Dies bedeutet, wie man aus Fig. 3b erkennen kann, daß der Behälterrand 2 und der Deckelrand 7 unter dem sich im Gefäßinnenraum 15 aufbauenden Druck einen größeren Abstand voneinander haben können, als in der Ausgangslage gemäß Fig. 3a. Die Dichtigkeit des Kochgefäßes wird jedoch dadurch gewährleistet, daß die Dichtlippe 28 der Ringdichtung 26 von dem sich aufbauenden Gefäßinnendruck desto stärker an die Oberseite des Behälterrandes 2 angedrückt wird, je höher dieser Innendruck liegt. Aus den geometrischen Verhältnissen von Fig. 3b ist auch zu erkennen, daß sich unter einem solchen Gefäßinnendruck die Verschlußglieder 4 nicht mehr ohne weiteres in ihre Öffnungsstellung von Fig. 3a zurückschwenken lassen. Dies würde nur unter Überwindung des Gefäßinnendruckes, d.h. unter geringfügigem Zusammenpressen von Behälter 1 und Deckel 3 möglich sein. Damit stellt die Ausgestaltung gemäß den Fig. 3a und 3b eine Nulldrucksicherung dar.

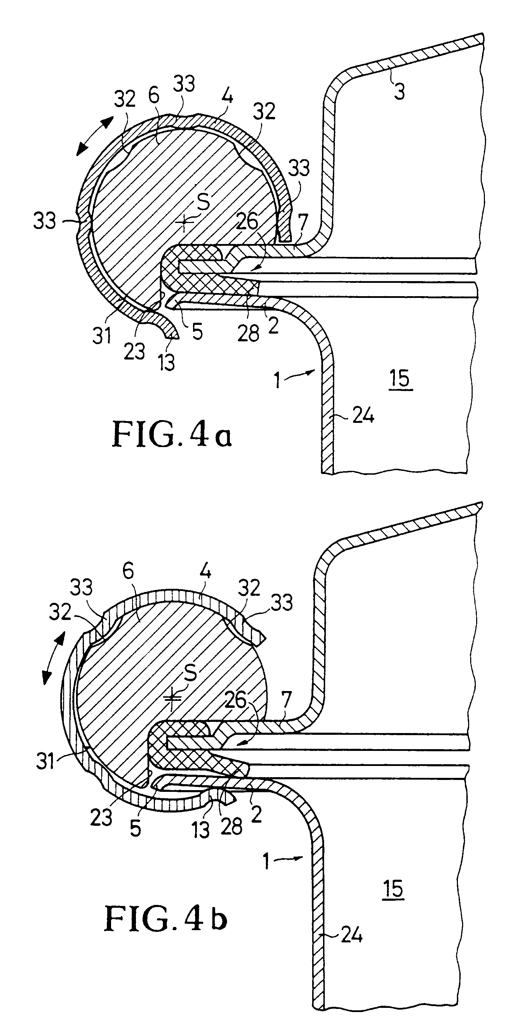

Die Ausgestaltung der Erfindung gemäß den Fig. 4a und 4b ist der zuvor abgehandelten ähnlich. Zwar sind hier die Verschlußglieder 4 wieder im wesentlichen kreiszylindrisch. Sie haben jedoch in ihrer Verriegelungsstellung jeweils im Abstand von 45° von der Horizontalen und um 90° zueinander versetzt einwärts gewölbte Sicherungswandabschnitte 33, welche in der in Fig. 4b dargestellten Verriegelungsstellung in entsprechend angeordnete Einbuchtungen 32 des Formkörpers 6 einrasten können. Auch hierdurch wird eine Nulldrucksicherung in der zuvor erläuterten Weise erreicht.

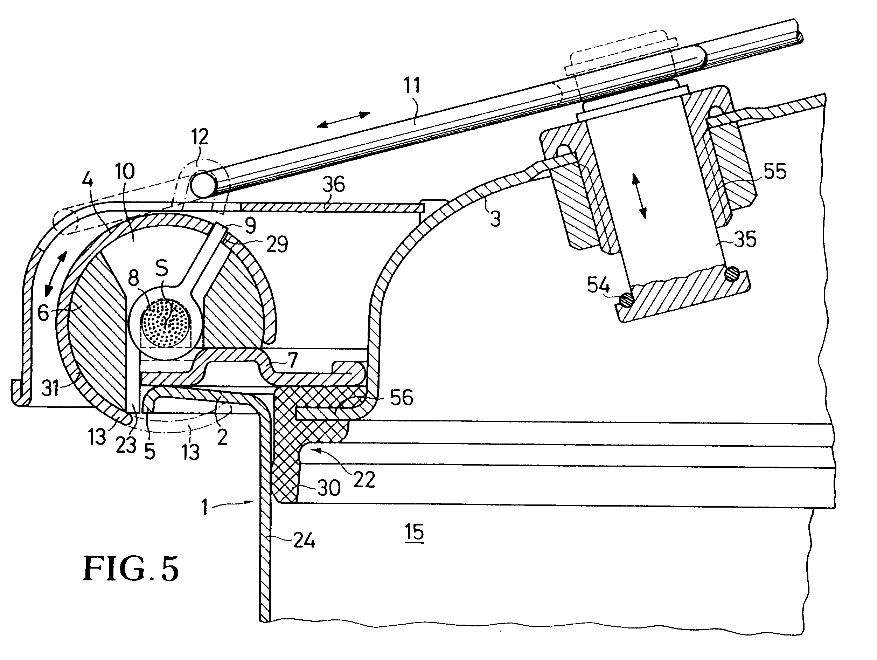

Gemäß der in Fig. 5 dargestellten Ausgestaltung der Erfindung sind die Verschlußglieder 4 über einen gemeinsamen Betätigungsmechanismus synchron betätigbar. Der Betätigungsmechanismus weist eine dem Gefäßrand folgende flexible Welle 8 auf. Die Welle 8 ist in den Formkörpern 6 derart aufgenommen, daß ihre Drehachse mit der Schwenkachse S der Verschlußglieder 4 zusammenfällt. Die Welle 8 hat in Abständen der Verschlußglieder 4 im wesentlichen radiale Mitnehmerarme 9 zur Betätigung der einzelnen Verschlußglieder 4. Die Mitnehmerarme 9 greifen dabei in Öffnungen 29 der Verschlußglieder 4 ein. Jeder Formkörper 6 ist mit einer schlitzförmigen Aussparung 10 für das Verschwenken der Mitnehmerarme 9 versehen. An der Welle 8 oder an zumindest einem Verschlußglied 4 ist ein Schwenkhebel 12 befestigt, der mit in dem dargestellten Ausführungsbeispiel als Betätigungsstange ausgebildeten Betätigungsmitteln 11 in Eingriff steht. Die Betätigungsstange ist zur Mitte des Deckels 3, also beispielsweise zu einem dort vorgesehenen Deckelgriff geführt, von wo aus sie von der Bedienungsperson in der angedeuteten Pfeilrichtung derart hin- und herbewegt werden kann, daß sämtliche Verschlußglieder 4 gemeinsam in ihre dargestellte Öffnungsstellung bzw. in ihre strichpunktiert dargestellte Verriegelungsstellung geschwenkt werden können.

Die Verschlußglieder 4 sind von einer um den Deckel 3 umlaufenden Abdeckung 36 überkragt. In der Wandung des Deckels 3 ist ein stiftförmiges Sperrglied 35 unter dem Gefäßinnendruck bzw. seinem Eigengewicht auf- und abbewegbar. In der in Fig. 5 dargestellten unteren Freigabestellung ist die Bewegung der Betätigungsmittel 11 nicht behindert. Durch den Druckaufbau im Gefäßinnenraum 15 steigt das Sperrglied 35 nach oben, bis es mit einem Dichtring 54 dichtend an die Stirnseite einer in der Wandung des Deckels 3 angeordneten Führungshülse 55 anschlägt. In dieser Sperrstellung behindert das Sperrglied 35, wie mit gestrichelten Linien angedeutet, die Bewegung des Betätigungsmittels 11, so daß ein Öffnen des Verschlußmechanismus bei im Kochgefäß herrschenden Innendruck verhindert ist.

Der Deckelrand 7 ist in dem in Fig. 5 dargestellten Ausführungsbeispiel als vom Deckelkörper selbständiges Ringelement ausgebildet. Er kann zusammen mit den auf ihm befestigten Formkörpern 6, den darauf gelagerten Verschlußgliedern 4 einschließlich der flexiblen Welle 8, der Mitnehmerarme 9 und dem Schwenkhebel 12 sowie der Abdeckung 36 als selbständig montierbare und demontierbare Baueinheit ausgebildet sein. Der Körper des Deckels 3 hat einen nach außen abgewinkelten Randflansch 56, auf welchen die im Querchnitt U-förmige Ringdichtung 22 aufgesteckt ist. Der obere Schenkel der Ringdichtung 22 liegt zwischen dem Randflansch 56 und dem aufgesetzten Deckelrand 7. Eine senkrecht nach unten weisende Dichtungslippe 30 der Ringdichtung 22 wird von dem Gefäßinnendruck an die Behälterwandung 24 gedrückt.

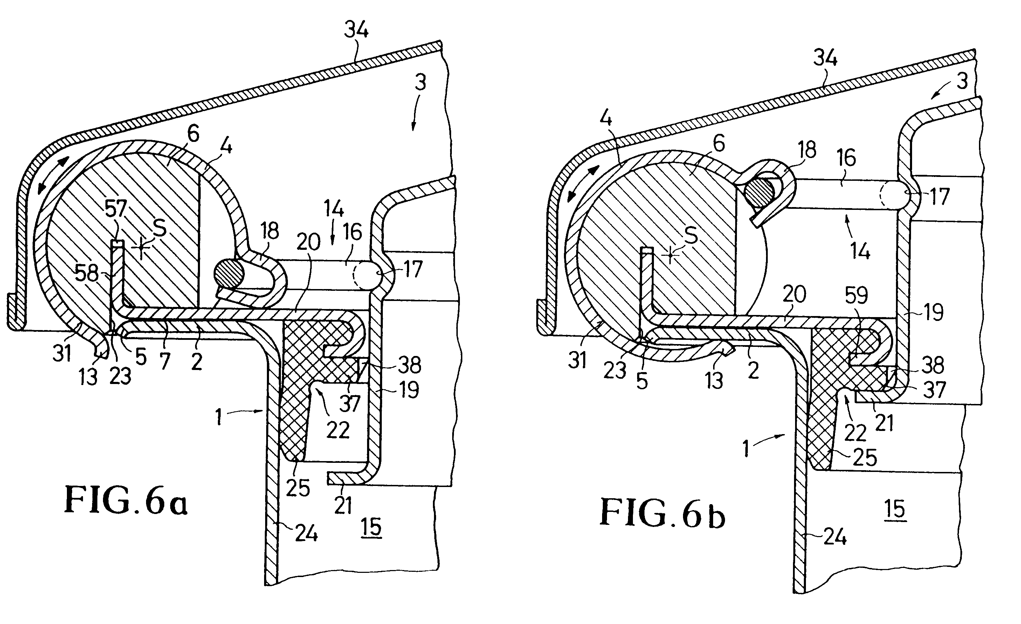

Bei der in den Fig. 6a bis 6c veranschaulichten Ausführungsform der Erfindung ist der Deckel 3 in einen den Deckelrand 7 bildenden Ringabschnitt 20 und einen unter dem Gefäßinnendruck ansteigenden und dessen Eigengewicht absinkenden Innendeckel 19 unterteilt. Die Verschlußglieder 4 sind mittels Formkörper 6 am Deckelrand 7 angeordnet. Zur Halterung der Formkörper 6 sind diese mit einem Schlitz 57 auf aufwärts gebogene Randabschnitte 58 des Deckelrandes 7 aufgesteckt. Der Innendeckel 19 ist mittels einer Dichtungslippe 37 an dem Ringabschnitt 20 geführt, welche in Abständen mit Durchtrittsöffnungen 38 versehen ist. Die Dichtungslippe 37 bildet einen Teil der Ringdichtung 22, welche in Verschlußstellung auch der Anlage eines am unteren Ende nach außen abgebogenen Dichtrandes 31 des Innendeckels 19 dient. Die zwischen der Dichtlippe 37 und der Außenfläche des Innendeckels 19 wirksamen Reibungskräfte sind geringer als die Reibungskräfte, mit welcher der Ringabschnitt 20 mittels der Ringdichtung 22 über der Dichtungslippe 25 an dem Behälter 1 gehalten wird. Deswegen kann sich der Innendeckel 19 bei ansteigendem Gefäßinnendruck relativ zu dem Ringabschnitt 20 anheben. Die Durchtrittsöffnungen 38 sind so gering bemessen, daß zwar die aus dem Gefäßinnenraum 15 zu verdrängende Luft bei Druckanstieg entweichen kann, andererseits sich ein hinreichender Druck aufbaut, der den Innendeckel 19 so weit anhebt` bis er seine in Fig. 6b dargestellte Verschlußstellung einnimmt, in welcher der Dichtrand 21 an der Dichtungslippe 37 anliegt. Die Ringdichtung 22 ist in diesem Fall auf eine nach außen umgebogenen Randabschnitt 59 des Ringabschnitts 20 aufgesteckt.

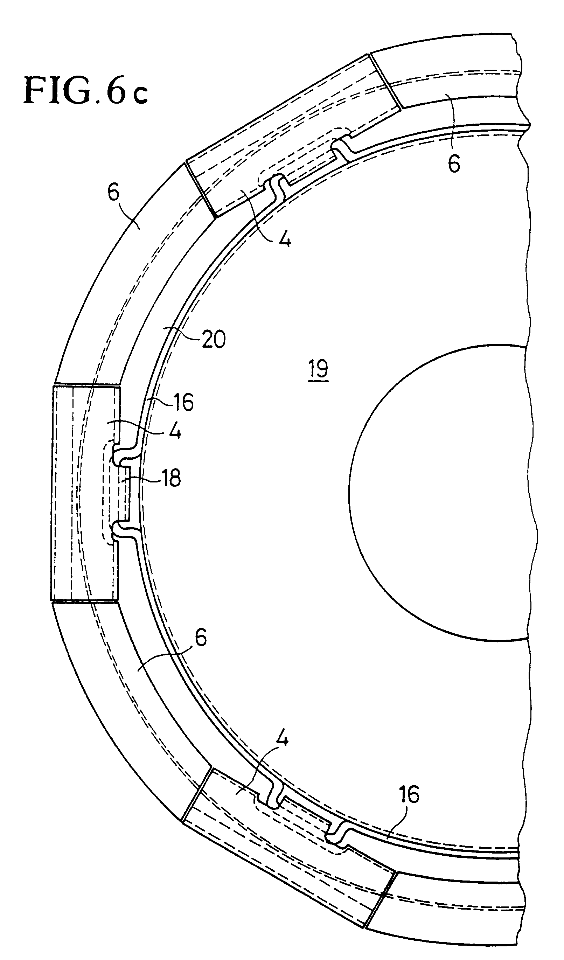

Bei dieser Ausgestaltung sind Betätigungsmittel 14 für die Verschlußglieder 4 vorgesehen, welche durch den sich im Gefäßinnenraum 15 aufbauenden Gefäßinnendruck betätigt werden. Die Auf- und Abbewegung des Innendeckels 19 wird nämlich von Übertragungsmitteln 16 auf wenigstens eines der Verschlußglieder 4 oder die Welle 8 übertragen. Die Übertragungsmittel 16 weisen als Verbindungsglied einen an dem Innendeckel 19 und der Welle 8 oder an wenigstens einem der Verschlußglieder 4 angreifendem, den Innendeckel 19 umgebenden Drahtring auf, wie dies aus Fig. 6c ersichtlich ist. Das als Drahtring ausgebildete Übertragungsmittel 16 ist einerseits fest mit dem Innendeckel 19 in eine Umfangsnut 17 des Innendeckels 19 eingreifend verbunden und andererseits drehbar in einer Öse 18 des Verschlußgliedes 4 gelagert. Wie aus dem Vergleich der Fig. 6a und 6b ersichtlich ist, nimmt dadurch der Innendeckel 19 bei Druckanstieg die Verschlußglieder 4 mit und schwenkt sie aus der Öffnungsstellung in die Verriegelungsstellung. Beim Absinken des Gefäßinnendruckes erfolgt selbsttätig ein Zurückschwenken der Verschlußglieder 4 aus der Verriegelungsstellung in die Öffnungsstellung, so daß der Deckel 3 einfach vom Behälter 1 wieder abgenommen werden kann.

Bei der in den Fig. 6a und 6b veranschaulichten Ausführungsform der Erfindung sind der Innendeckel 19 und der Ringabschnitt 20 mit dem Verschlußmechanismus einschließlich der Verschlußglieder 4 von einem mit dem Ringabschnitt 20 verbundenen Oberdeckel 34 abgedeckt.

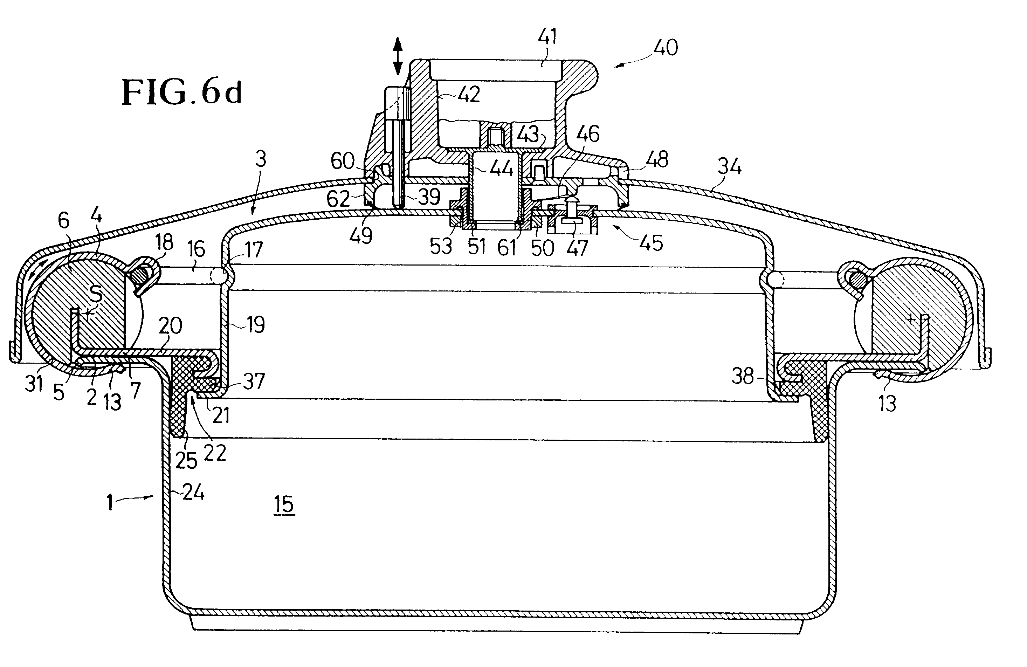

Dies ist insbesondere aus Fig. 6d ersichtlich. Bei der dort dargestellten Ausführungsform der Erfindung ist in einer mittigen Aussparung 60 des Oberdeckels 34 ein Deckelgriff 40 drehbar gelagert. In einem Abschnitt des Deckelgriffs 40 ist ein Anzeigestift 39 so angeordnet, daß er bei Überführen des Innendeckels 19 in die obere Verschlußstellung aus einer unteren Ruhestellung in eine obere Anzeigestellung axial verschoben wird. An der Stellung des Anzeigestiftes 39 kann daher die Stellung des Innendeckels 19 relativ zu dem am Behälterrand 2 gehaltenen Ringabschnitt 20 abgelesen und damit festgestellt werden, ob das Kochgefäß noch unter Druck steht oder nicht. In einer mittigen Vertiefung 42 des Deckelgriffs 40 ist ein Thermometer 41 angeordnet, welches mit einem unteren hülsenförmigen Fortsatz 44 aus Metall oder einem sonstigen gut wärmeleitfähigen Material in der Wandung des Oberdeckels 34 festgelegt ist. Der Boden der Vertiefung 42 wird in seinem mittleren Bereich von einem oberen Flanschabschnitt 43 des Fortsatzes 44 gebildet. Der Fortsatz 44 ragt mit seinem unteren Ende unter Einhaltung eines Entlüftungsspaltes 53 in eine in einer mittigen Aussparung der Wandung des Innendeckels 19 aufgenommenen Führungsbuchse 50. Da der Fortsatz 44 hülsenförmig ausgebildet ist, steht damit das Innere des Fortsatzes 44 in Strömungsverbindung mit dem Gefäßinnenraum 15, wodurch eine günstige Wärmeübertragung erreicht wird. Ein guter Wärmeübergang wird ferner dadurch gewährleistet, daß die beim Aufheizen des Kochgefäßes aufsteigende Luft durch den Ringspalt 53 an dem Fortsatz 44 vorbei nach außen strömen kann, bis der Innendeckel 19 in seine obere Verschlußstellung gelangt und die untere Stirnfläche des Fortsatzes 44 an einem Dichtring 61 zur Anlage kommt, welcher auf einer Innenschulter 51 der Führungsbuchse 50 aufgenommen ist. Dadurch ist ein weiteres Ausströmen von Luft bzw. Dampf auch dort verhindert, sobald der Dichtrand 21 zur Anlage an die Dichtungslippe 37 kommt. Der Deckelgriff 40 trägt an einem nach unten weisenden Ringabschnitt 62 eine Umfangsringdichtung 49, welche sich in Verschlußstellung des Innendeckels 19 an dessen Oberseite dichtend anlegt. Innerhalb der Umfangsringdichtung 49 ist in der Wandung des Innendeckels 19 ein Abdampfventil 45 angeordnet. Der drehbar gelagerte Deckelgriff 40 weist dem Abdampfventil 45 zugeordnet eine Betätigungskurve 46 auf, mittels welcher unter Drehen des Deckelgriffs 40 der Verschlußkörper 47 des Abdampfventils 45 von einer Schließstellung in eine Öffnungsstellung überführbar ist, wenn sich der Innendeckel 19 in seiner oberen Verschlußstellung befindet. Der aus dem Abdampfventil 45 entweichende Dampf kann durch eine seitliche Austrittsöffnung 48 nach der Seite hin entweichen, so daß die Hand der Bedienungsperson, welche den Deckelgriff 40 ergreift, nicht mit dem Dampf in Berührung kommt.

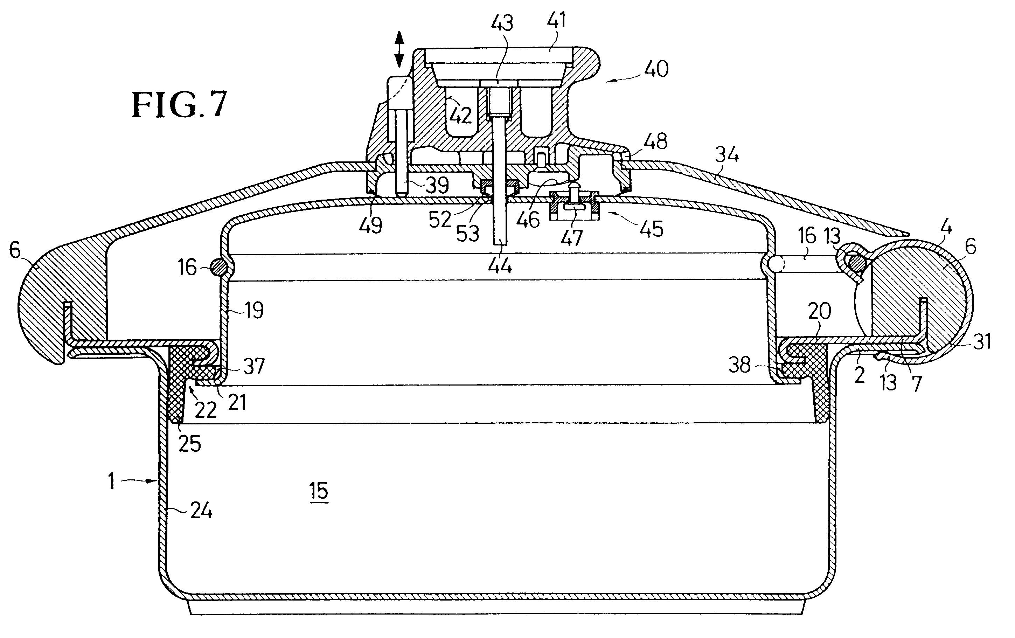

Bei der in Fig. 7 dargestellten Ausführungsform der Erfindung bildet der Oberdeckel 34 selbst an seinem Außenrand die Formkörper 6. Oberdeckel 34 einschl. der Formkörper 6 können dabei aus Kunststoff bestehen.

Im übrigen unterscheidet sich diese Ausführungsform der Erfindung gemäß Fig. 7 von der in Fig. 6c dargestellten lediglich im Bereich der Thermometerdurchführung vom Deckelgriff 40 aus in den Gefäßinnenraum 15. Der Fortsatz 44 ragt unter Freihaltung eines Entlüftungsspaltes 53 durch die Wandung des Innendeckels 19 hindurch. Auf der Unterseite des Deckelgriffs 40 ist eine Ringdichtung 52 vorgesehen, welche den Fortsatz 44 unmittelbar umgibt, so daß der Entlüftungsspalt 53 in der oberen Verschlußstellung des Innendeckels 19 von der Ringdichtung 52 abgedichtet wird. Auch bei diesem Ausführungsbeispiel erfolgt, weil der Fortsatz 44 bis in den Gefäßinnenraum 15 hineinragt und beim Aufheizen die aufsteigende Luft an dem Fortsatz 44 vorbeistreicht und weil der Entlüftungsspalt 53 mittig angeordnet ist und dadurch die aufsteigende Luft bis zum Dampfaustritt praktisch vollständig ausgetrieben werden kann, eine zuverlässige Temperaturmessung.

### Bezugszeichenliste:

- 1: Behälter
- 2: Behälterrand
- 3: Deckel
- 4: Verschlußglieder
- 5: Außenkante
- 6: Formkörper
- 7: Deckelrand
- 8: flexible Welle
- 9: Mitnehmerarme
- 10: Aussparung
- 11: Betätigungsmittel
- 12: Schwenkhebel
- 13: Verriegelungswandabschnitt
- 14: Betätigungsmittel
- 15: Gefäßinnenraum
- 16: Übertragungsmittel
- 17: Umfangsnut
- 18: Öse
- 19: Innendeckel
- 20: Ringabschnitt
- 21: Dichtrand
- 22: Ringdichtung
- 23: Aussparung
- 24: Behälterwandung
- 25: Dichtungslippe
- 26: Ringdichtung
- 28: Dichtungslippe
- 29: Öffnungen
- 30: Dichtungslippe
- 31: Lagerfläche
- 32: Abflachung oder Einbuchtung
- 33: Sicherungswandabschnitt
- 34: Oberdeckel
- 35: Sperrglied
- 36: Abdeckung
- 37: Dichtungslippe
- 38: Durchtrittsöffnungen
- 39: Anzeigestift
- 40: Deckelgriff
- 41: Thermometer
- 42: Vertiefung
- 43: Flanschabschnitt
- 44: Ansatz
- 45: Abdampfventil
- 46: Betätigungskurve
- 47: Verschlußkörper
- 48: Austrittsöffnung
- 49: Umfangsringdichtung
- 50: Führungsbuchse
- 51: Innenschulter
- 52: Ringdichtung
- 53: Entlüftungsspalt
- 54: Dichtring
- 55: Führungshülse
- 56: Randflansch
- 57: Schlitz
- 58: Randabschnitte
- 59: Randabschnitt
- 60: Aussparung
- 61: Dichtring
- 62: Ringabschnitt
- S: Schwenkachse

## Patentansprüche

1. Kochgefäß, welches einen Behälter (1) mit einem nach außen abgewinkelten umlaufenden Behälterrand (2) und einen auf den Behälter (1) aufsetzbaren Deckel (3) sowie eine Verschlußeinrichtung mit Verschlußgliedern (4) aufweist, welche an dem Deckel (3), vorzugsweise im Bereich des Deckelrandes (7), angeordnet aus einer den Deckel (3) gegenüber dem Behälter (1) freigebenden Öffnungsstellung um eine Schwenkachse (S), die etwa parallel zu der ihr zugewandten Außenkante (5) oder zu der Tangentialen dieser Außenkante (5) des Behälterrandes (2) verläuft, in eine Verriegelungsstellung schwenkbar sind, in welcher sie den Behälterrand (2) zur druckdichten Verriegelung des Deckels (3) gegenüber dem Behälter (2) untergreifen, dadurch gekennzeichnet, daß die Verschlußglieder (4) als Hohlkörper mit im wesentlichen parallel zur Richtung der Schwenkachse (S) verlaufender, im wesentlichen zylindrischer oder prismatischer Wandung ausgebildet sind, welche nur über einen Teil Ihres Umfangs reicht und mit einem Verriegelungswandabschnitt (13) aus einer Öffnungsstellung in eine Verriegelungsstellung schwenkbar sind, und daß die Verschlußglieder (4) auf einem Formkörper (6) gelagert sind.

2. Kochgefäß nach Anspruch 1, dadurch gekennzeichnet, daß der Formkörper (6) am Deckelrand (7) angeordnet ist und in einer sektorförmigen Aussparung (23) den Behälterrand (2) und den Deckelrand (7) aufnimmt.

3. Kochgefäß nach Anspruch 1 oder 2, dadurch gekennzeichnet, daß jedenfalls ein Teil der Lagerfläche (31) des Formkörpers (6) für das Verschlußglied (4) kreiszylindrisch ausgebildet ist.

4. Kochgefäß nach einem der Ansprüche 1 bis 3, dadurch gekennzeichnet, daß die Lagerfläche (31) wenigstens eine Abflachung oder Einbuchtung (32) aufweist, welche in Verriegelungsstellung des Verschlußelements (4) mit einem entsprechend flachen oder komplementär gewölbten Sicherungswandabschnitt (33) des Verschlußelements (4) zusammenwirkt.

5. Kochgefäß nach einem der Ansprüche 1 bis 4, dadurch gekennzeichnet, daß sich der Deckel (3) gegenüber dem Behälter (1) unter dem Gefäßinnendruck anhebt und die Abdichtung des Gefäßinnenraums (15) mittels einer Dichtungslippe (28) einer am Gefäßrand (2, 7) angeordneten Ringdichtung (26) gewährleistet ist, welche sich unter dem Gefäßinnendruck an den Behälter (1) bzw. den Deckel (3) anlegt.

6. Kochgefäß nach einem der Ansprüche 1 bis 5, dadurch gekennzeichnet, daß jedenfalls die Lagerfläche des Formkörpers (6) für das Verschlußglied (4) aus einem Material, insbesondere Kunststoff, mit geringem Reibwert besteht.

7. Kochgefäß nach einem der Ansprüche 1 bis 6, dadurch gekennzeichnet, daß mehrere Verschlußglieder (4) in Draufsicht auf den Deckel (3) gesehen polygonzugartig im Bereich des Gefäßrandes (2, 7) angeordnet sind.

8. Kochgefäß nach einem der Ansprüche 1 bis 7, dadurch gekennzeichnet, daß die Verschlußglieder (4) über einen gemeinsamen Betätigungsmechanismus synchron betätigbar sind.

9. Kochgefäß nach Anspruch 8, dadurch gekennzeichnet, daß der Betätigungsmechanismus eine - dem Gefäßrand (2, 7) folgende - flexible Welle (8) zum Betätigen der Verschlußglieder (4) aufweist.

10. Kochgefäß nach Anspruch 9, dadurch gekennzeichnet, daß an der Welle (8) die Verschlußglieder (4) betätigende Mitnehmerarme (9) befestigt sind.

11. Kochgefäß nach Anspruch 9 oder 10, dadurch gekennzeichnet, daß die Welle (8) in den Formkörpern (6) im Bereich der Schwenkachse (S) vorzugsweise achsgleich zu dieser, drehbar angeordnet ist und daß in jedem Formkörper (6) eine Aussparung (10) für die Schwenkbewegung eines Mitnehmerarmes (9) vorgesehen ist.

12. Kochgefäß nach einem der Ansprüche 9 bis 11, dadurch gekennzeichnet, daß die Welle (8) bzw. wenigstens eines der Verschlußglieder (4) über z.B. eine Betätigungsstange aufweisende Betätigungsmittel (11) von der Oberseite des Deckels (3), vorzugsweise dem Deckelgriff (40), aus zentral betätigbar ist bzw. sind.

13. Kochgefäß nach Anspruch 12, dadurch gekennzeichnet, daß die Betätigungsmittel (11) an wenigstens einem an der Welle (8) oder wenigstens einem der Verschlußglieder (4) befestigten Schwenkhebel (12) angreifen.

14. Kochgefäß nach einem der Ansprüche 9 bis 11, dadurch gekennzeichnet, daß an der Welle (8) oder wenigstens einem der Verschlußglieder (4) ein nach außen weisender Handbetätigungshebel befestigt ist.

15. Kochgefäß nach einem der Ansprüche 8 bis 14, dadurch gekennzeichnet, daß der Betätigungsmechanismus mittels eines unter dem Gefäßinnendruck als Nulldrucksicherung wirkenden Sperrgliedes (35) gegen Öffnen der Verschlußglieder (4) sicherbar ist.

16. Kochgefäß nach Anspruch 15, dadurch gekennzeichnet, daß das Sperrglied (35) als in dem Deckel (3) angeordneter, sich unter dem Gefäßinnendruck bzw. seinem Eigengewicht auf und abbewegender Sperrstift ausgebildet ist, welcher in Sperrstellung eine Bewegung der Betätigungsmittel (11) für die Verschlußglieder (4) in die Öffnungsstellung verhindert.

17. Kochgefäß nach einem der Ansprüche 1 bis 16, gekennzeichnet durch Betätigungsmittel (14) für die Verschlußglieder (4), welche durch den sich im Gefäßinnenraum (15) aufbauenden Gefäßinnendruck betätigt werden.

18. Kochgefäß nach Anspruch 17, dadurch gekennzeichnet, daß die Betätigungsmittel (14) Übertragungsmittel (16) aufweisen, welche die Bewegung eines sich unter dem Gefäßinnendruck anhebenden und unter dem Eigengewicht absenkenden Innendeckels (19) auf wenigstens eines der Verschlußglieder (4) oder die Welle (8) übertragen.

19. Kochgefäß nach Anspruch 18, dadurch gekennzeichnet, daß die Übertragungsmittel (16) wenigstens ein an dem Innendeckel (19) und der Welle (8) oder an wenigstens einem der Verschlußglieder (4) angreifendes, z.B. als den Innendeckel (19) umgebender Drahtring ausgebildetes Verbindungsglied aufweisen.

20. Kochgefäß nach Anspruch 19, dadurch gekennzeichnet, daß das Verbindungsglied einerseits fest mit dem Innendeckel (19) verbunden in eine Umfangsnut (17) des Innendeckels (19) und andererseits drehbar gelagert in eine Öse (18) des Verschlußgliedes (4) eingreift.

21. Kochgefäß nach einem der Ansprüche 17 bis 20, dadurch gekennzeichnet, daß der Deckel (3) einen äußeren, den Deckelrand (7) bildenden Ringabschnitt (20) aufweist, auf welchem die Verschlußglieder (4) angeordnet sind und in welchem der Innendeckel (19) auf- und abbewegbar geführt ist.

22. Kochgefäß nach einem der Ansprüche 1 bis 21, dadurch gekennzeichnet, daß der Innendeckel (19) mittels einer ggf. Durchtrittsöffnungen (38) aufweisenden Dichtungslippe (37) an dem Ringabschnitt (20) geführt ist.

23. Kochgefäß nach einem der Ansprüche 21 oder 22, dadurch gekennzeichnet, daß der Innendeckel (19) den Ringabschnitt (20) mit einem nach außen abgewinkelten Dichtrand (21) untergreift, welcher sich erst in der obersten Verschlußstellung des Innendeckels (19), unter dem Gefäßinnendruck dichtend an den Ringabschnitt (20) - ggf. unter Zwischenlage einer Ringdichtung (22) - anlegt.

24. Kochgefäß nach Anspruch 23, dadurch gekennzeichnet, daß die Dichtungslippe (37) einen Teil der Ringdichtung (22) bildet, welche der Anlage des Dichtrandes (21) des Innendeckels (19) dient.

25. Kochgefäß nach Anspruch 24, dadurch gekennzeichnet, daß die Ringdichtung (22) auf dem Innenrand des Ringabschnitts (20) aufgesteckt ist.

26. Kochgefäß nach Anspruch 24 oder 25, dadurch gekennzeichnet, daß die Ringdichtung (22) eine sich unter dem Gefäßinnendruck an die Innenfläche der Behälterwandung (24) anlegende Dichtlippe (25) aufweist.

27. Kochgefäß nach einem der Ansprüche 1 bis 26, dadurch gekennzeichnet, daß die Verschlußglieder (4) von einer um den Deckel (3) umlaufenden Abdeckung (36) überkragt werden.

28. Kochgefäß nach Anspruch 27, dadurch gekennzeichnet, daß die Abdeckung (36) mit dem Deckelrand (7) bzw. den den Deckelrand (7) bildenden Ringabschnitt (20) oder eines Teils derselben eine selbständig montierbare und demontierbare bauliche Einheit bildet.

29. Kochgefäß nach einem der Ansprüche 1 bis 28, dadurch gekennzeichnet, daß der Deckel (3) einen die Verschlußglieder (4) und ggf. den Innendeckel (19) übergreifenden Oberdeckel (34) aufweist.

30. Kochgefäß nach einem der Ansprüche 1 bis 29, dadurch gekennzeichnet, daß die Formkörper (6) von dem Randabschnitt des Oberdeckels (34) gebildet sind.

31. Kochgefäß nach einem der Ansprüche 18 bis 30, dadurch gekennzeichnet, daß der Innendeckel (19) mit einem Anzeigestift (39) zusammenwirkt, welcher die Stellung des Innendeckels (19) relativ zu dem Ringabschnitt (20) anzeigt.

32. Kochgefäß nach Anspruch 31, dadurch gekennzeichnet, daß der Anzeigestift (39) in dem Deckelgriff (40) axial beweglich gelagert ist.

33. Kochgefäß nach einem der Ansprüche 18 bis 32, dadurch gekennzeichnet, daß ein Thermometer (41) in einem mittig im Oberdeckel (34) vorgesehenen Deckelgriff (40) angeordnet und mit einem Fortsatz (44) durch die Wandung des Oberdeckels (34) und die Wandung des Innendeckels (19) bis zum Gefäßinnenraum (15) hindurchgeführt ist.

34. Kochgefäß nach Anspruch 33, dadurch gekennzeichnet, daß der Fortsatz (44) in Wandung des Innendeckels (19) verschieblich gelagert ist.

35. Kochgefäß nach Anspruch 33 oder 34, dadurch gekennzeichnet, daß der Deckelgriff (40) auf seiner Unterseite eine Umfangsringdichtung (49) trägt, gegen welche sich die Wandung des Innendeckels (19) in dessen Verschlußstellung dichtend anlegt.

36. Kochgefäß nach einem der Ansprüche 33 bis 35, dadurch gekennzeichnet, daß in der Wandung des Innendeckels (19) eine Führungsbuchse (50) für den Fortsatz (44) unter Wahrung eines Entlüftungsspalts (53) angeordnet ist und die Führungsbuchse (50) eine Innenschulter (51) aufweist, gegen welche sich der Fortsatz (44) in Verschlußstellung des Innendeckels (19) dichtend anlegt.

37. Kochgefäß nach einem der Ansprüche 33 bis 35, dadurch gekennzeichnet, daß der Fortsatz (44) unter Wahrung eines Entführungsspalts (53) durch die Wandung des Innendeckels (19) hindurchgeführt ist und der Deckelgriff (40) auf seiner Unterseite eine den Fortsatz (44) unmittelbar umgebende Ringdichtung (52) trägt, gegen welche sich die Wandung des Innendeckels (19) in dessen Verschußstellung dichtend anlegt.

38. Kochgefäß nach einem der Ansprüche 33 bis 37, dadurch gekennzeichnet, daß der Deckelgriff (40) drehbar an der Wandung des Oberdeckels (34) ein Abdampfventil (45) überkragend gehalten ist und eine Betätigungskurve (46) aufweist, mittels welcher unter Drehen des Deckelgriffs (40) der Verschlußkörper (47) des Abdampfventils (45) von seiner Schließstellung in eine Öffnungsstellung überführbar ist.

39. Vorrichtung nach Anspruch 38, dadurch gekennzeichnet, daß der Deckelgriff (40) im Bereich des Abdampfventils (45) eine Austrittsöffnung (48) aufweist, welche den durch das Abdampfventil (45) austretenden Dampf zur Seite hin ablenkt.

40. Kochgefäß nach Anspruch 38 oder 39, dadurch gekennzeichnet, daß das Abdampfventil (45) in der Wandung des Innendeckels (19) angeordnet ist.

## Claims

1. Cooking vessel, which has a container (1) with an outwardly bent, peripheral container rim (2) and a lid (3) that can be placed on the container (1) and a sealing device with sealing elements (4), which, arranged on the lid (3), preferably in the region of the lid rim (7), can be swivelled out of an opening position releasing the lid (3) relative to the container (1), about a swivel axis (S) extending approximately parallel to the outer edge (5) facing it or to the tangential of this outer edge (5) of the container rim (2), into a locking position, in which they reach under the container rim (2) in order to lock the lid (3) in a pressure-tight manner relative to the container (2), characterised in that the sealing elements (4) are designed as hollow bodies with a substantially cylindrical or prismatic wall that extends substantially parallel to the direction of the swivel axis (S) and which reaches only over one part of its circumference and can be swivelled with one locking wall section (13) out of an opening position into a locking position, and in that the sealing elements (4) are mounted on a shaped body (6).

2. Cooking vessel, according to claim 1, characterised in that the shaped body (6) is arranged on the lid rim (7) and accommodates in a sector-shaped recess (23) the container rim (2) and the lid rim (7).

3. Cooking vessel, according to claim 1 or 2, characterised in that in any case a part of the bearing surface (31) of the shaped body (6) for the sealing element (4) is designed circular-cylindrically.

4. Cooking vessel, according to one of claims 1 to 3, characterised in that the bearing surface (31) has at least a flattening off or indentation (32), which in the locking position of the sealing element (4) interacts with a correspondingly flat or complementarily arched safety wall section (33) of the sealing element (4).

5. Cooking vessel, according to one of claims 1 to 4, characterised in that the lid (3) lifts relative to the container (1) under internal vessel pressure, and the seal of the vessel interior (15) is guaranteed by means of a sealing lip (28) of an annular seal (26), which is arranged on the vessel rim (2, 7) and which rests on the container (1) or the lid (3) under internal vessel pressure.

6. Cooking vessel, according to one of claims 1 to 5, characterised in that in any case the bearing surface of the shaped body (6) for the sealing element (4) is made of a material, in particular plastics, with a low coefficient of friction.

7. Cooking vessel, according to one of claims 1 to 6, characterised in that several sealing elements (4) are arranged in a polygonal course in the region of the vessel rim (2, 7), when the lid (3) is viewed from the top.

8. Cooking vessel, according to one of claims 1 to 7, characterised in that the sealing elements (4) can be operated synchronously by way of a common actuating mechanism.

9. Cooking vessel, according to claim 8, characterised in that the actuating mechanism has a flexible shaft (8), which follows the vessel rim (2, 7), in order to operate the sealing elements (4).

10. Cooking vessel, according to claim 9, characterised in that driving arms (9) actuating the sealing elements (4) are attached to the shaft (8).

11. Cooking vessel, according to claim 9 or 10, characterised in that the shaft (8) is rotatably arranged in the shaped bodies (6) in the region of the swivel axis (S), preferably coaxially thereto, and in that in each shaped body (6) there is provided a recess (10) for the swivel movement of each driving arm (9).

12. Cooking vessel, according to one of claims 9 to 11, characterised in that the shaft (8) or at least one of the sealing elements (4) can be operated centrally by way of, for example, actuating means (11) having an actuating rod from the upper side of the lid (3), preferably the lid handle (40).

13. Cooking vessel, according to claim 12, characterised in that the actuating means (11) engage at least one pivoting lever (12) secured to the shaft (8) or to at least one of the sealing elements (4).

14. Cooking vessel, according to one of claims 9 to 11, characterised in that an outwardly pointing hand actuating lever is secured to the shaft (8) or at least one of the sealing elements (4).

15. Cooking vessel, according to one of claims 8 to 14, characterised in that the actuating mechanism is safe against opening the sealing elements (4) by means of a blocking element (35) acting as a zero pressure safety under the internal pressure of the vessel.

16. Cooking vessel, according to claim 15, characterised in that the blocking element (35) is formed as a blocking pin, arranged in the lid (3), that moves up and down under the internal pressure of the vessel or its intrinsic weight and which in the blocking position prevents the actuating means (11) for the sealing elements (4) from moving into the opening position.

17. Cooking vessel, according to one of claims 1 to 16, characterised by actuating means (14) for the sealing elements (4), which are actuated by the internal pressure of the vessel building up in the vessel interior (15).

18. Cooking vessel, according to claim 17, characterised in that the actuating means (14) have transfer means (16), which transfer the movement of an inner lid (19), rising under the internal pressure of the vessel and falling under its intrinsic weight, to at least one of the sealing elements (4) or the shaft (8).

19. Cooking vessel, according to claim 18, characterised in that the transfer means (16) have at least one connecting element formed, for example, as a wire ring enclosing the inner lid (19) and engaging the inner lid (19) and the shaft (8) or at least one of the sealing elements (4).

20. Cooking vessel, according to claim 19, characterised in that the connecting element, which is firmly connected to the inner lid (19) on the one hand, engages a circumferential groove (17) of the inner lid (19) and, rotatably mounted on the other hand, engages an eye (18) of the sealing element (4).

21. Cooking vessel, according to one of claims 17 to 20, characterised in that the lid (3) has an external annular section (20) which forms the lid rim (7) and on which are arranged the sealing elements (4) and in which the inner lid (19) is guided moving up and down.

22. Cooking vessel, according to one of claims 1 to 21, characterised in that the inner lid (19) is guided on the annular section (20) by means of a sealing lip (37), possibly having passage openings (38).

23. Cooking vessel, according to one of claims 21 or 22, characterised in that the inner lid (19) reaches under the annular section (20) with an outwardly bent sealing rim (21), which does not rest in a sealing manner on the annular section (20) under the internal vessel pressure, possibly with intercalation of an annular seal (22), until in the uppermost sealed position of the inner lid (19).

24. Cooking vessel, according to claim 23, characterised in that the sealing lip (37) forms a part of the annular seal (22), which serves for the abutment of the sealing rim (21) of the inner lid (19).

25. Cooking vessel, according to claim 24, characterised in that the annular seal (22) is slipped on the inner rim of the annular section (20).

26. Cooking vessel, according to claim 24 or 25, characterised in that the annular seal (22) has a sealing lip (25) resting on the inner surface of the container wall (24) under the internal pressure of the vessel.

27. Cooking vessel, according to one of claims 1 to 26, characterised in that the sealing elements (4) are overhung by a cover (36) extending around the lid (3).

28. Cooking vessel, according to claim 27, characterised in that the cover (36) with the lid rim (7) or the annular section (20) forming the lid rim (7) or a part thereof forms a modular unit that can be independently assembled and disassembled.

29. Cooking vessel, according to one of claims 1 to 28, characterised in that the lid (3) has an upper lid (34) reaching over the sealing elements (4) and possibly the inner lid (19).

30. Cooking vessel, according to one of claims 1 to 29, characterised in that the shaped bodies (6) are formed by the rim section of the upper lid (34).

31. Cooking vessel, according to one of claims 18 to 30, characterised in that the inner lid (19) interacts with an indicator pin (39), which indicates the position of the inner lid (19) relative to the annular section (20).

32. Cooking vessel, according to claim 31, characterised in that the indicator pin (39) can be moved axially in the lid handle (40).

33. Cooking vessel, according to one of claims 18 to 32, characterised in that a thermometer (41) is arranged in a lid handle (40) provided centrally in the upper lid (34) and is guided with an extension (44) through the wall of the upper lid (34) and the wall of the inner lid (19) as far as the vessel interior (15).

34. Cooking vessel, according to claim 33, characterised in that the extension (44) is displaceably mounted in the wall of the inner lid (19).

35. Cooking vessel, according to claim 33 or 34, characterised in that on its underside the lid handle (40) bears a circumferential annular seal (49), against which the wall of the inner lid (19) rests sealingly in its sealed position.

36. Cooking vessel, according to one of claims 33 to 35, characterized in that a guide bushing (50) for the extension (44) is arranged in the wall of the inner lid (19), while maintaining a venting gap (53), and the guide bushing (50) has an inner shoulder (51), against which the extension (44) rests sealingly in the sealed position of the inner lid (19).

37. Cooking vessel, according to one of claims 33 to 35, characterized in that while maintaining a venting gap (53) the extension (44) is guided through the wall of the inner lid (19), and the lid handle (40) bears on its lower side an annular seal (52) that envelops directly the extension (44) and against which the wall of the inner lid (19) rests in a sealing manner in the sealed position thereof.

38. Cooking vessel, according to one of claims 33 to 37, characterized in that the lid handle (40), which can be rotated on the wall of the upper lid (34), is held overhanging a steam valve (45) and has an actuating curve (46), by means of which, while rotating the lid handle (40), the sealing body (47) of the steam valve (45) can be conveyed from its closed position into an opening position.

39. Device, according to claim 38, characterised in that the lid handle (40) has in the region of the steam valve (45) an exhaust opening (48), which diverts the steam exiting through the steam valve (45) to the side.

40. Cooking vessel, according to claim 38 or 39, characterised in that the steam valve (45) is arranged in the wall of the inner lid (19).

## Revendications

1. Récipient de cuisson comprenant un corps (1) pourvu d'un bord (2) circulaire courbé vers l'extérieur, un couvercle (3) qui peut être placé sur le corps (1) ainsi qu'un dispositif de verrouillage comportant des organes de verrouillage (4) qui sont disposés sur le couvercle (3) , de préférence dans la région du bord (7) de celui-ci, et qui, par pivotement autour d'un axe de pivotement (S) sensiblement parallèle à l'arête extérieure (5) du bord (2) du corps située en vis-à-vis ou à la tangente à ladite arête (5) extérieure, peuvent être amenés d'une position d'ouverture qui libère le couvercle (3) par rapport au corps (1) dans une position de verrouillage dans laquelle lesdits organes s'engagent sous le bord (2) corps et verrouillent de manière étanche le couvercle (3) sur le corps (1), caractérisé par le fait que les organes de verrouillage (4) sont agencés sous forme d'éléments creux avec une paroi essentiellement cylindrique ou prismatique qui s'étend sensiblement parallèlement à la direction de l'axe de pivotement (S), seulement sur une partie de sa circonférence, et par une partie de paroi de verrouillage (13) peuvent être amenés par pivotement d'une position d'ouverture dans une position de verrouillage et par le fait que les organes de verrouillage sont montés sur un élément moulé (6).

2. Récipient de cuisson selon la revendication 1, caractérisé par le fait que l'élément moulé (6) est disposé sur le bord (7) du couvercle et reçoit dans un évidement (23) en forme de secteur le bord (2) du corps et le bord (7) du couvercle.

3. Récipient de cuisson selon la revendication 1 ou la revendication 2, caractérisé par le fait qu'au moins une partie de la surface (31) formant palier de l'élément moulé (6) de l'organe de verrouillage (4) est cylindro-circulaire.

4. Récipient de cuisson selon l'une des revendications 1 à 3, caractérisé par le fait que la surface (31) formant palier comporte au moins un méplat ou une forme rentrante (32) qui, lorsque l'organe de verrouillage (4) est en position de verrouillage, coopère avec une partie de paroi de verrouillage (33) plane ou à courbure complémentaire de l'organe de verrouillage (4).

5. Récipient de cuisson selon l'une des revendications 1 à 4, caractérisé par le fait que le couvercle (3) se soulève par rapport au corps (1) sous l'action de la pression régnant à l'intérieur du récipient et que l'étanchéité du volume intérieur (15) du récipient est assurée par une lèvre (28) d'un joint annulaire (26) qui est disposé sur le bord (2,7) du récipient et qui, sous l'action de la pression régant à l'intérieur dudit récipient (1), s'applique contre le corps (1) ou le couvercle (3).

6. Récipient de cuisson selon l'une des revendications 1 à 5, caractérisé par le fait qu'au moins la surface formant palier de l'élément moulé (6) de l'organe de verrouillage (4) est réalisée en un matériau à faible coefficient de frottement, notamment en matière plastique.

7. Récipient de cuisson selon l'une des revendications 1 à 6, caractérisé par le fait que plusieurs organes de verrouillage (4) sont disposés dans la région du bord (2,7) du récipient en formant un polygone en vue de dessus.

8. Récipient de cuisson selon l'une des revendications 1 à 7, caractérisé par le fait que les organes de verrouillage (4) sont actionnés en synchronisme au moyen d'un mécanisme d'actionnement commun.

9. Récipient de cuisson selon la revendication 8, caractérisé par le fait que le mécanisme d'actionnement comprend un arbre (8) flexible pour l'actionnement des organes de verrouillage (4) lequel arbre suit le bord (2, 7) du récipient.

10. Récipient de cuisson selon la revendication 9, caractérisé par le fait que des bras d'entraînement (9) qui actionnent les organes de verrouillage (4) sont fixés sur l'arbre (8).

11. Récipient de cuisson selon la revendication 9 ou 10, caractérisé par le fait que l'arbre (8) est monté avec possibilité de rotation dans les éléments moulés (6), dans la région de l'axe de pivotement (S), de préférence a étant coaxial avec celui-ci, et par le fait qu'il est prévu dans chaque élément moulé (6) un évidement (10) permettant le pivotement d'un bras d'entraînement (9).

12. Récipient de cuisson selon l'une des revendications (9 à 11), caractérisé par le fait que l'arbre (8) et au moins l'un des organes de verrouillage (4) peut ou peuvent être actionnés de manière centralisée à partir de la face supérieure du couvercle (3), de préférence à partir de la poignée du couvercle (4), par l'intermédiaire de moyens d'actionnement (11) qui comprennent par exemple une tringle d'actionnement.

13. Récipient de cuisson selon la revendication 12, caractérisé par le fait que les moyens d'actionnement (11) sont en prise avec au moins un levier oscillant (12) qui est fixé sur l'arbre (8) ou sur au moins l'un des organes de verrouillage (4).

14. Récipient de cuisson selon l'une des revendications 9 à 11, caractérisé par le fait qu'un levier d'actionnement manuel tourné vers l'extérieur est fixé sur l'arbre (8) ou sur au moins l'un des organes de verrouillage (4).

15. Récipient de cuisson selon l'une des revendications 8 à 14, caractérisé par le fait que le mécanisme d'actionnement peut être verrouillé de manière à interdire l'ouverture des organes de verrouillage (4) grâce à un élément de blocage (35) qui est sollicité par la pression régnant à l'intérieur du récipient et agit comme dispositif de sécurité à pression nulle.

16. Récipient de cuisson selon la revendication 15, caractérisé par le fait que l'élément de blocage (35) se présente sous la forme d'un doigt de blocage qui est logé dans le couvercle (3), se soulève ou s'abaisse sous l'action de la pression régnant à l'intérieur du récipient, voire de son propre poids et, en position de blocage, interdit un déplacement vers la position d'ouverture des moyens d'actionnement (11) des organes de verrouillage (4).

17. Récipient de cuisson selon l'une des revendications 1 à 16, caractérisé par des moyens d'actionnement (14) des organes de verrouillage (4) qui sont actionnés par la pression qui s'établit à l'interieur du volume (15) du récipient.

18. Récipient de cuisson selon la revendication 17, caractérisé par le fait que les moyens d'actionnement (14) comportent des moyens de transmission (16) qui transmettent à au moins l'un des organes de verrouillage (4) ou à l'arbre (8) le mouvement d'un couvercle intérieur (19) qui se soulève sous l'action de la pression régnant à l'intérieur du récipient et qui s'abaisse sous l'action de son propre poids.

19. Récipient de cuisson selon la revendication 18, caractérisé par le fait que les moyens de transmission (16) comportent au moins un organe de liaison qui est en prise avec le couvercle intérieur (19) et l'arbre (8) ou avec l'un au moins des organes de verrouillage (4) et est agencé par exemple sous forme de jonc en fils d'acier entourant le couvercle intérieur (14).

20. Récipient de cuisson selon la revendication 19, caractérisé par le fait que l'organe de liaison d'une part, est monté fixe sur le couvercle intérieur (19) dans une gorge périphérique (17) dudit couvercle intérieur (19) et d'autre part, pénètre avec possibilité de rotation dans un oeillet (18) de l'organe de verrouillage (4).

21. Récipient de cuisson selon l'une des revendications 17 à 20. caractérisé par le fait que le couvercle (3) comporte une partie annulaire (20) extérieure qui constitue le bord (7) du couvercle, sur laquelle sont disposés les organes de verrouillage (4) et dans laquelle le couvercle intérieur (19) est monté avec possibilité de déplacement vers le haut et vers le bas.

22. Récipient de cuisson selon l'une des revendications 1 à 21. caractérisé par le fait que le couvercle intérieur (19) est guidé sur la partie annulaire (20) par une lèvre d'étanchéité (37), qui le cas échéant présente des ouvertures de passage (38).

23. Récipient de cuisson selon l'une des revendications 21 ou 22. caractérisé par le fait que le couvercle intérieur (19) s'engage sous la partie annulaire (20) par un bord d'étanchéité (21) courbé vers l'extérieur qui, dès que le couvercle intérieur (19) se trouve dans sa position de verrouillage supérieure, sous l'action de la pression régnant à l'intérieur du récipient, est appliqué de manière étanche contre la partie annulaire (20) - éventuellement avec interposition d'un joint annulaire (22).

24. Récipient de cuisson selon la revendication 23, caractérisé par le fait que la lèvre d'étanchéité (37) est une partie du joint annulaire (32) qui sert d'appui au bord (21) du couvercle intérieur (19).

25. Récipient de cuisson selon la revendication 24, caractérisé par le fait que le joint annulaire (22) est enfilé sur le bord intérieur de la partie annulaire (20).

26. Récipient de cuisson selon la revendication 24 ou la revendication 25, caractérisé par le fait que le joint annulaire (22) comporte une lèvre d'étanchéité (25) qui, sous la pression régnant à l'intérieur du récipient, est appliquée sur la face intérieure de la paroi (24) du corps.

27. Récipient de cuisson selon l'une des revendications 1 à 26, caractérisé par le fait que les organes de verrouillage (24) sont recouverts par un capot (36) qui s'étend tout autour du couvercle (3).

28. Récipient de cuisson selon la revendication 27, caractérisé par le fait que le capot (36) forme avec le bord (7) du couvercle ou avec la partie annulaire (20) qui constitue le bord (7) du couvercle ou encore avec une partie de celle-ci une unité de construction qui peut être montée et démontée séparément.

29. Récipient de cuisson selon l'une des revendications 1 à 28, caractérisé par le fait que le couvercle (3) présente un couvercle supérieur (34) qui recouvre les organes de verrouillage (4) et éventuellement le couvercle intérieur (19).

30. Récipient de cuisson selon l'une des revendications 1 à 29, caractérisé par le fait que les éléments moulés (6) sont formés par la partie du bord du couvercle supérieur (34).

31. Récipient de cuisson selon l'une des revendications 18 à 30, caractérisé par le fait que le couvercle intérieur (19) coopère avec un index (39) qui indique la position du couvercle intérieur (19) par rapport à la partie annulaire (20).

32. Récipient de cuisson selon la revendication 31, caractérisé par le fait que l'index (39) est monté mobile dans la direction axiale dans la poignée du couvercle (40).

33. Récipient de cuisson selon l'une des revendications 1 à 32, caractérisé par le fait qu'un thermomètre (41) est disposé dans une poignée (40) du couvercle située au centre du couvercle supérieur (34) et par un prolongement (44) traverse la paroi du couvercle supérieur (34) et éventuellement la paroi du couvercle intérieur (19) et pénètre dans le volume intérieur (15) du récipient.

34. Récipient selon la revendication 33, caractérisé par le fait que le prolongement (44) est monté avec possibilité de déplacement en translation dans la paroi du couvercle intérieur (19).

35. Récipient selon la revendication 33 ou 34, caractérisé par le fait que la poignée (40) du couvercle porte sur sa face inférieure un' joint annulaire (49) périphérique contre lequel la paroi du couvercle (19) intérieur vient en appui étanche lorsque ledit couvercle intérieur est en position de fermeture.

36. Récipient de cuisson selon l'une des revendications 33 à 35, caractérisé par le fait qu'une douille (50) de guidage du prolongement (44) est disposée dans la paroi du couvercle intérieur (19) en laissant une fente de passage d'air (53) et que la douille de guidage (50) présente un épaulement intérieur (51) contre lequel le prolongement (44) vient en appui étanche lorsque le couvercle intérieur (19) est en position de fermeture.

37. Récipient de cuisson selon l'une des revendications 33 à 35, caractérisé par le fait que le prolongement (44) traverse la paroi du couvercle intérieur (19) en laissant une fente (53) de passage d'air et que la poignée (40) du couvercle porte sur sa face inférieure un joint annulaire (52) qui entoure directement le prolongement (44) et contre lequel la paroi du couvercle intérieur (19) vient en appui étanche lorsque celui-ci se trouve en position de fermeture.

38. Récipient de cuisson selon l'une des revendications 33 à 37, caractérisé par le fait que la poignée (40) du couvercle qui est monté tournant dans la paroi du couvercle supérieur (34) comporte une valve (45) de décharge de vapeur en saillie et une came (46) d'actionnement au moyen de laquelle, en tournant la poignée (40) du couvercle l'obturateur (47) de la soupape de décharge de vapeur (45) peut être amené d'une position de fermeture dans une position d'ouverture.

39. Dispositif selon la revendication 38, caractérisé par le fait que, dans la région de la soupape de charge de vapeur (45), la poignée (40) du couvercle présente un orifice de sortie (48) qui dévie latéralement la vapeur sortant de la soupape (45) de décharge de vapeur.

40. Récipient de cuisson selon la revendication 38 ou 39, caractérisé par le fait que la soupape de décharge de vapeur (45) est montée dans la paroi du couvercle intérieur (19).
